# EUROPEAN PATENT APPLICATION

(11) **EP 1 955 883 A2**
(43) Date of publication of application: **13.08.2008**
(21) Application number: 08250475.4
(22) Date of filing: 08.02.2008
(51) Int. Cl.: B60J 1/02, B60J 1/00, B60J 10/02

(54) **Connecting a trim molding to windshield glass**

(30) Priority: 12.02.2007 US 705203
(71) Applicant: Automotive Components Holdings, LLC, Dearborn, MI 48120 (US)
(72) Inventor: Kolokowski, Paul J., Southgate, Michigan 48195 (US)
(74) Representative: Giles, Ashley Simon

(57) **Abstract**

A windshield assembly (10) includes a plate of glass (16) having first and second lateral surfaces (22,24) and an peripheral edge (14) extending between the first and second surfaces, a molding (12) having a channel cross section comprising mutually spaced legs (18,20) and a web (26) extending between the legs and having an inner surface (30), the web and legs extending along the peripheral edge, and a double-sided, pressure-sensitive tape (32) extending along the peripheral edge and including a first side covered with adhesive (36) and bonded to the inner surface (30) of the web (26), and a second side located opposite the first side, covered with adhesive and bonded to the peripheral edge.

## Description

### BACKGROUND OF THE INVENTION

### 1. Field of the Invention

This invention relates generally to a trim molding that extends around the perimeter of a glass plate, particularly a molding for use with automotive vehicle windows.

### 2. Description of the Prior Art

A windshield is typically inserted in a molding located at the perimeter of the windshield and is fixed to the chassis of an automobile by an adhesive.

Molding retention is generally achieved using one or more different designs. The molding is formed with a C-channel cross section having two legs, between which the glass plate is inserted. The molding is retained in position on the glass by forming the width between the legs of the C-channel smaller than the thickness of the glass plate, such that the legs grip the glass with an elastic, interference fit on opposite sides of the plate.

Alternatively, additional material such as hot melts, butyl or equivalent materials in the liquid state or plastic state are applied to the inner surfaces of the C-channel molding. When these materials cure, an adhesive bond is created between the surfaces of the glass and the molding.

However, such moldings become are released from the glass during shipping or installation of the glass assembly into the vehicle due to the molding twisting off the glass or a failure of the adhesive due to improper bonding between the C-channel and the edge of glass. Further, the glass may fracture during shipping or installation of the glass due to the creation of rigid, non-compliant bonds between the adhesives in the C-channel molding and the glass.

There is a need in the industry for a reliable method that retains the molding in its proper position on the glass and protects the glass against damage during handling and shipping.

### SUMMARY OF THE INVENTION

A peripheral molding lining the edge of an automotive windshield includes double-sided, pressure sensitive tape applied to the inner surface of a C-channel molding. The tape retains produces a reliable bond between the molding and the glass edge and maintains the molding in its proper location on the glass. The tape avoids the occurrence of fractures of the glass because no rigid, non-compliant bonds are produced between the edge of glass and the molding.

A windshield assembly includes a plate of glass having first and second lateral surfaces and an peripheral edge extending between the first and second surfaces, a molding that having a channel cross section comprising mutually spaced legs and a web extending between the legs and having an inner surface, the web and legs extending along the peripheral edge, and a double sided, pressure sensitive tape extending along the peripheral edge and including a first side covered with adhesive and bonded to the inner surface of the web, and a second side located opposite the first side, covered with adhesive and bonded to the peripheral edge.

A method for assembling the windshield includes the steps of forming a molding having a channel section comprising a web having an inner surface and mutually spaced legs, each leg located at an opposite side of the web; forming a plate of glass having an peripheral edge; placing on the inner surface of the web a tape having adhesive on a first side and on a second side opposite the first side; bonding a first side of the tape to the inner surface of the web; placing the glass plate between the legs such that the peripheral edge of the glass contacts the second side of the tape and the legs overlap the glass plate; and using the second side of the tape to bond the molding to the peripheral edge of the glass.

Because double-sided, pressure sensitive tape has lower modulus of elasticity than that of glass, the tape strains or elongates a greater magnitude due to the application or development of external forces, such as thermal force produced by temperature variations and mechanical forces due to handling, than does the glass. The tape does not cause the glass to fracture during expansion and contraction due to temperature variations that occur after a bond is produced by the tape between the glass and the molding.

When applying conventional adhesives into a C-channel molding and onto the glass surfaces, primers and cleaners are required to prepare the glass surface for bonding. But double-sided, pressure sensitive tape requires no primers, cleaners or other materials containing harmful chemicals, such as those required to produce an adhesive bond between the molding and glass by conventional methods. When applying a double-sided tape to the glass, the edge of the glass need only be cleaned beforehand with a lint-free cloth.

The scope of applicability of the preferred embodiment will become apparent from the following detailed description, claims and drawings. It should be understood, that the description and specific examples, although indicating preferred embodiments of the invention, are given by way of illustration only. Various changes and modifications to the described embodiments and examples will become apparent to those skilled in the art.

### DESCRIPTION OF THE DRAWINGS

These and other advantages will become readily apparent to those skilled in the art from the following detailed description of a preferred embodiment when considered in the light of the accompanying drawings in which:
Figure 1 is a front view of a portion of an automotive vehicle windshield trim molding secured to a peripheral edge of a glass plate;
Figure 2 is a cross section taken at plane 2-2 of the windshield and molding of Figure 1, a representative section of windshield glass being shown in phantom; and
Figure 3 is a perspective view of a strip the double sided tape shown in Figure 2.

### DESCRIPTION OF THE PREFERRED EMBODIMENT

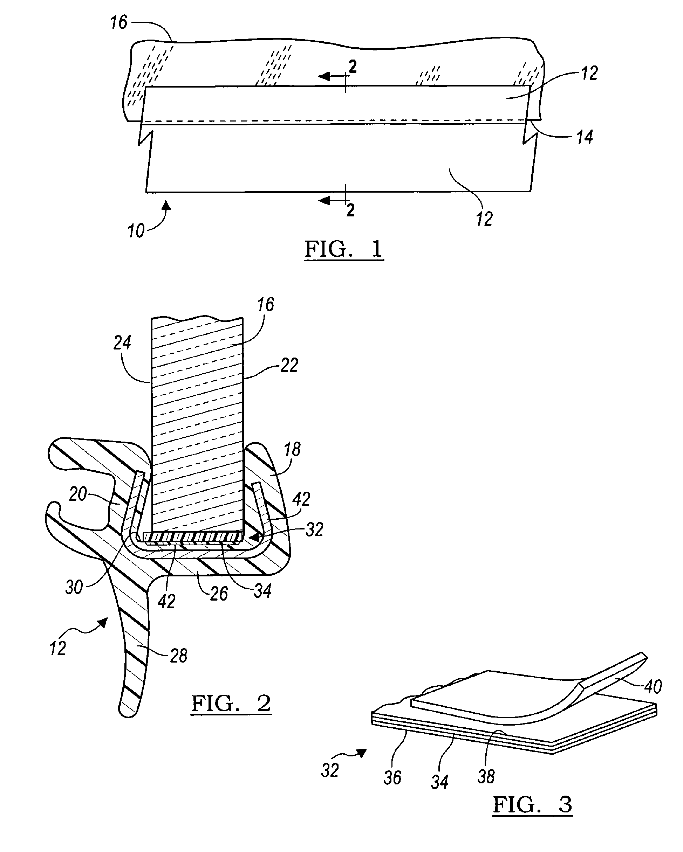

A portion of a windshield assembly 10 for an automotive vehicle, shown in Figure 1, includes a molding 12 secured to the peripheral edge 14 of a glass windshield 16, which is usually in the form of a planar plate or a contoured plate. Although the invention is described and claimed with reference to a windshield, it should be understood that the invention is entirely applicable also to a rear window, side window or a window in any other surface of the vehicle.

Referring now to Figures 2 and 3, the molding 12 is in the form of a C-channel, which surrounds the peripheral edge 14 of the windshield glass member 16. The molding 12 is formed with a pair of legs 18, 20, each leg engaging an opposite surface 22, 24 of the windshield glass 16. Preferably, the legs 18, 20 project outwardly from a web portion 26 and are angled inwardly toward one another to provide an resilient, elastic, spring-like force on the windshield glass 16, the width of the channel between the legs 18, 20 being less than the thickness of the glass 16 thereby producing an interference fit. The molding 12 is also preferably formed with an integral elastomeric member 28, which projects in an opposite direct from that of the legs 18, 20 for use in connecting the molding 12 to the automobile body in a known manner.

After the molding 12 is formed in the C-channel shape, a strip of double-sided, pressure-sensitive tape 32 is applied to the inner surface 30 of the web 26, preferably along the length of the molding and across the width of inner surface 30. The lower surface 34 of the tape 32 carries a thin strip of adhesive 36, which bonds the tape 32 to the inner surface 30. The opposite surface of tape 32 carries a thin strip of adhesive 38, which is initially covered by a thin liner 40 to prevent contaminating adhesive strip 38 with dirt or other debris. Before applying the molding 12 onto the glass 16, liner 40 is removed by peeling, thereby exposing adhesive strip 38. Then molding 12 is forced over the free edge 14 of the glass such that the edge 14 contacts and is bonded to the outer adhesive strip 38. The molding 12 is thereby secured to the peripheral edge 14 of the glass 16 by the tape 32, and the opposite lateral surfaces 22, 24 of the glass 16 are secured to the inner surfaces of legs 18, 20 by the elastic force glass produced by the interference fit.

Preferably the molding surrounds and is bonded to a stiffener 42, which applies a spring force to the legs 18, 20 when spread apart to encapsulate the edge 14 of the windshield glass 16. Preferably, the molding 12 and stiffener 42 are formed as an integral part, i.e., having no connections or joints interconnecting them. An adhesive bond connecting the stiffener 42 and molding 12 is preferably formed when the molding is being extruded.

Preferably the molding 12 is formed from ABS, polyvinyl chloride (PVC) or any other polycarbonate. The stiffener 42 is preferably of aluminum or a plastic, whose flexural modulus or elastic modulus is greater than that of the material of the molding 12.

A preferred double-sided, pressure-sensitive tape is Acrylic Plus Exterior Tape formed of Acrylate polymers and/or copolymers, which is commercially available from 3M Company.

Preferably an adhesion promoter 42 is used to enhance the bond strength between the adhesive layer 36 on the tape 32 and the material of the C-channel molding 12. The adhesion promoter 42 is applied to the inner surface 30 of molding 12 before applying double-sided, pressure-sensitive tape 32 in the channel of the molding, and preferably during the extrusion process that forms the molding. Without promoter 42, the failure mode would be adhesive failure at the substrate. A preferred adhesion promoter is Norton 2287A.

The double-sided, pressure-sensitive tape 32 provides a soft elastically flexible material that accommodates differential thermal expansion and contraction of the molding 12 and glass 16 and retains the molding on the glass.

In accordance with the provisions of the patent statutes, the preferred embodiment has been described. However, it should be noted that the alternate embodiments can be practiced otherwise than as specifically illustrated and described.

## Claims

1. A method for assembling a windshield for an automotive vehicle, comprising the steps of:
(a) forming a molding having a channel section comprising a web having an inner surface and mutually spaced legs, each leg located at an opposite side of the web;
(b) forming a plate of glass having a peripheral edge;
(c) placing on the inner surface of the web a tape having adhesive on a first side and on a second side opposite the first side;
(d) bonding a first side of the tape to the inner surface of the web;
(e) placing the glass plate between the legs such that the peripheral edge of the glass contacts the second side of the tape and the legs overlap the glass plate; and
(f) using the second side of the tape to bond the molding to the peripheral edge of the glass.

2. The method of claim 1 wherein step (a) further comprises forming the molding of plastic from a member of the group including ABS, PVC and another polycarbonate.

3. The method of claim 1 wherein the tape includes a liner covering the second side, and step (e) further comprises removing the liner from the second side.

4. The method of claim 1 wherein step (a) further comprises:
forming a channel stiffener within the molding, the stiffener having arms, each arm extending along a respective molding leg, and step (e) further comprises placing the glass plate between the legs such that the legs contact the glass with an elastic, resilient force.

5. The method of claim 1 wherein:
step (a) further comprises forming the molding such that a width between the legs is less than the thickness of the windshield that is located between the legs; and
step (e) further comprises placing the glass plate between the legs such that the legs contact the glass with an elastic, resilient force.

6. The method of claim 1 further comprising the step of:
applying an adhesion promoter to the inner surface of the web before placing the tape on said inner surface.

7. A windshield assembly for an automotive vehicle, comprising:
a plate of glass having first and second lateral surfaces and an edge extending between the first and second surfaces and along a periphery of the glass;
a molding having a channel cross section comprising mutually spaced legs and a web extending between the legs and having an inner surface, the web and legs extending along the peripheral edge; and
a tape extending along the peripheral edge and including a first side covered with adhesive and bonded to the inner surface of the web, and a second side located opposite the first side, covered with adhesive and bonded to the peripheral edge.

8. The assembly of claim 7 wherein the molding is formed of ABS elastomer.

9. The assembly of claim 7 wherein the molding is formed of PVC elastomer.

10. The assembly of claim 7 further comprising:
a stiffener formed integrally within the molding, the stiffener having arms, each arm extending along a respective molding leg.

11. The assembly of claim 10 wherein the stiffener is formed of aluminum of a plastic having a flexural modulus or stiffness modulus that is greater than that of the molding.

12. A windshield assembly for an automotive vehicle, comprising:
a plate of glass having first and second lateral surfaces and an edge extending between the first and second surfaces and along a periphery of the glass;
a C-shaped channel portion extending along the peripheral edge and including a web portion, a first leg and a second leg projecting from the web portion, and an inner web surface, the legs being engagable with opposite lateral surfaces of said windshield along the peripheral edge, the legs being operable to flex in opposition to one another and to bear with a resilient elastic force against the lateral surfaces of the windshield;
a strip of double-sided, pressure sensitive tape extending along the peripheral edge and including a first side covered with adhesive and bonded to the inner surface of the web, and a second side located opposite the first side, covered with adhesive and bonded to the peripheral edge.

13. The assembly of claim 10 wherein the molding is formed of plastic from a member of the group including ABS, PVC and another polycarbonate.

14. The method of claim 10 further comprising:
a channel stiffener formed integrally within the molding, the stiffener having arms, each arm extending along a respective molding leg.

15. The assembly of claim 14 wherein the stiffener is formed of aluminum of a plastic having a flexural modulus or stiffness modulus that is greater than that of the molding.
